# EUROPEAN PATENT SPECIFICATION

(11) **EP 1 580 445 B1**
(45) Date of publication and mention of the grant of the patent: **25.02.2009**
(21) Application number: 04007154.0
(22) Date of filing: 25.03.2004
(51) Int. Cl.: F16C 3/02

(54) **Transmission component of a metal matrix composite material**
Kraftübertragungsbauteil aus Metallmatrixverbundwerkstoff
Eléments de transmission en matériau composite à matrice métallique

(43) Date of publication of application: 28.09.2005
(73) Proprietor: MX Composites AB, 583 30 Linköping (SE)
(72) Inventor: Persson, Håkan, 614 33 Söderköping (SE); Strand, Kent, 583 33 Linköping (SE); Råsbäck, Jonas, 521 73 Kinnarp (SE)
(74) Representative: Börlin, Maria

(56) References cited:
- WO-A-01/87520
- US-A- 4 995 281
- US-A- 5 534 044
- US-A1- 2003 209 103

## Description

### Field of the invention

The present invention relates to the field of transmission components.

### Background of the invention

Transmission components are used in the industry for transmission of power and/or motion inside an engine, or from or to the engine, such as transmission components in a universal joint, a gear box or a turbine.

In order to improve transmission components so as to achieve better performance in terms of fuel consumption, emissions, vibrations, noise, comfort, etc, it has been proposed to make transmission components out of metal matrix composite materials (MMC). The MMC materials have a relatively low weight, which make them particularly suitable for moving parts, e.g. in an engine. Further, by using MMC materials components may be made lighter, stronger, more rigid, and with better endurance properties than what is possible to achieve by using conventional materials.

A general definition of a metal matrix composite (MMC) is: a composite material in which one constituent is a metal or alloy forming at least one percolating network. The other constituent is embedded in this metal matrix and usually serves as reinforcement.

A general definition of reinforcement is: a constituent (phase or combination of phases) of the MMC originating from the ingredient material which is combined with a metal or an alloy to produce a metal matrix composite (e.g., alumina fibres, silicon carbide whiskers, steel fibres, or graphite particles, even if, in the case of graphite particles, the reinforcement does not "reinforce" the matrix). A reinforcement is characterised by its chemical composition, its shape and dimensions, its properties as ingredient material and its volume fraction and spatial distribution in the matrix.

A problem that has been associated with MMC materials is however that the reinforcements used are often very hard, which renders the materials difficult to machine, and unsuitable in arrangements where adjacent components might be subject to wear.

WO 01/88219 (Saab AB) describes an engine component made of an MMC material. For attaining the necessary tolerances of the component surfaces that have rotational contact or sliding contact with other engine components, the surfaces are coated with a friction-reducing tribologically functional material by means of a surface treatment process. In particular, the tolerance-critical surfaces are coated with a metallic layer that is easier to work by machining than the metal matrix itself, such as a bronze layer.

WO 99/32677 (Lanxide technology company) describes an engine component made of an aluminium-based MMC material, wherein the contacting or wear surfaces are provided with a layer of aluminium/aluminium nitride metal composite material. A potential advantage resides in that aluminium/aluminium nitride metal is said to be easier to machine than most metal matrix composite materials, and that it has advantageous properties in terms of contact wear. In particular, it is mentioned that aluminium nitride is suitable for the layer since it is not as hard as many other ceramic materials that are generally used as reinforcement of MMC materials.

Because of the first mentioned advantageous properties of MMC materials, it would be desirable to increase the number of applications in which components made of MMC materials may be used.

### Summary of the invention

In view of the above, it is an object of the present invention to provide at least one new range of applications for transmission components made of MMC material.

This object is achieved by use of a first transmission component in a slide bearing application, said component having at least one surface being arranged in a slide bearing relationship against a second transmission component, wherein said surface and at least a portion of the first transmission component adjacent to said surface is made of the same metal matrix composite material.

In industry, slide bearing applications are to be found wherein components are arranged in a slide bearing relationship to each other. Such components are exposed to a harsh environment due to the operating conditions in e.g. an engine, where they must withstand adhesive and abrasive wear, high temperatures, and strains being due to the motion of the components, including direction reversals and velocity variations.

It has been a general opinion in the art that MMC materials are too hard and too abrasive to function properly in slide bearing applications. This opinion has applied in particular to those MMC materials that are suitable for making entire transmission components, i.e. having sufficient strength and durability for that purpose. Thus, MMC materials have previously not been used for direct slide bearing applications. Instead, MMC transmission components have been provided with bushings or the like, which in turn have been arranged in slide bearing relationship with other components.

In the above-mentioned WO 01/88219 (Saab AB), it is proposed that the tolerance-critical surfaces of an MMC transmission component must first be provided with a coating of a material that is easy to machine, before a bushing or the like may be attached to it. In the above-mentioned WO 99/32677 (Lanxide technology company), the surfaces is provided with a coating of a second MMC material, namely Al/AlN, in order to provide a surface that has the required tolerances, and that may possibly be used in a slide bearing application.

The inventors of the present application have found that transmission components made of MMC construction materials can advantageously be used in direct slide bearing applications, thus overcoming a wide-spread prejudice in the art. The slide bearing contact surfaces need not be coated or provided with bushings or other reinforcement, but can be made out of the same reinforced MMC material as the transmission component as a whole, or as a portion of the transmission component adjacent to the surface. This invention allows for new uses of MMC transmission components in slide bearing applications, without need for additional coatings or separate parts. Also, it has enabled new constructions where previous standard components used to enable slide bearing may be omitted, resulting in a diminished number of parts in the constructions. Thereby, the weight of the component set-up is diminished and the manufacturing costs are reduced.

The term "same material" as used herein, means that the MMC material has the same base material and the same reinforcement material in terms of chemical composition, shape, dimension and its properties as ingredient material. Also the volume fraction and spatial distribution of the reinforcement material of the surfaces should preferably be the same as in the component as a whole. However, due to circumstances during manufacture of the component, the fraction and distribution of the reinforcement material at the surfaces could however sometimes differ slightly from the content and distribution of the reinforcement material in the component as a whole. This is nevertheless considered to be the "same material".

Advantageously, the transmission component may be an engine component for transmission of power and/or motion inside an engine.

Preferably, the transmission component may be substantially made of the metal matrix composite material. If only a portion of the transmission component adjacent to the slide bearing surface is made of metal matrix composite material, this portion could advantageously be cast together with the remaining part of the transmission component. Regardless of the manufacturing technique used, such a portion should be an integrated portion of the transmission component, in contrast to coatings, layers and the like.

The second component, being arranged in the slide bearing relationship with the MMC material surface, may advantageously be made of different material than the MMC material of the first component. A material being different from the MMC material of the first component could be another MMC material, having different base material or reinforcement material than the first MMC material, in terms of chemical composition, shape and dimensions, volume fraction or spatial distribution. A material being different from the MMC material could also be a material not being an MMC material, such for example a steel or a chromed steel material. In order to avoid adhesive wear, it is advantageous that the two components in a slide bearing relationship have low solubility for each other, i.e. are different from each other.

Preferably, the slide bearing application is arranged with full-film lubrication or boundary lubrication. The lubrication provides for enhanced bearing properties and significantly less wear and friction of the components.

The transmission component made of MMC material may advantageously have a reinforcement content between 10% and 70%, preferably between 10% and 45%, most preferred between 15% and 40%. Preferably, the reinforcement is ceramic. Advantageously, it may be selected from the group consisting of carbides, oxides or borides, most preferred carbides. In particular, reinforcements such as silicon carbide and boron carbide are believed to be useful. The base substance may be at least one of aluminium, titanium, and alloys thereof, but also magnesium is believed to be advantageous. Thus, the metal matrix composite material should have the necessary properties for withstanding the stresses and strains to which a transmission component is often subjected due to its use as a fast moving part, and for withstanding environmental conditions, e.g. the conditions in an engine or a turbine, without cracking or deforming. Also, it should have the necessary properties for enabling the transmission component's proper function in a slide bearing application. Aluminium is believed to be particularly advantageous as a base material, due to its high conductivity of heat, which enables heat to be conducted away from the slide bearing area.

Preferably, the reinforcement is in the shape of particles. The particles may advantageously have a size less than 100 µm, preferably less than 15 µm, and most preferred less than 5 µm. When referring to the size of the particles, this is to be interpreted as is common in the art to be an average size. Having a large amount of particles, these will in fact be distributed around said average size. The particles may have a hardness being greater than 1200 HV, preferably greater than 2000 HV, most preferred greater than 2500 HV.

Advantageously, the transmission component may be manufactured by high speed machining, such as is known in the art and described in WO00/29151. Thus, the slide bearing surface is advantageously a high speed manufactured surface. However, it is envisaged that conventional manufacturing techniques may also be used.

In a particularly useful embodiment of the invention, the transmission component made of metal matrix composite material is a connecting rod. Due to the favourable wear properties of the invention, it is possible to connect the connecting rod directly in slide bearing relationship to a crankshaft of an engine, and/or to a gudgeon pin. Thus, the intermediate components conventionally used for connecting the connecting rod to a crank pin and/or a gudgeon pin may be omitted, enabling a less expensive, lighter, and more robust construction that what is conventional.

The conditions under which the transmission component must function, depends on the type of component and the type of engine or vehicle used. For example connecting rods may have to withstand a working temperature of up to 150 °C, and a working speed of up to 20 000 rpm. For turbines, the working temperature may be up to 250 °C, and the working speed up to 100 000 rpm.

In a second aspect of the invention there is provided a pair of transmission components, wherein at least one of said components is substantially made of metal matrix composite material (MMC). The components have slide bearing surfaces being correspondingly shaped to one another, enabling arrangement of said surfaces against each other in a slide bearing relationship, wherein the slide bearing surface of said at least one component is made of the same metal matrix composite material as the component as a whole. The advantages as described in relation to the use of a transmission component as described above applies equally to the pair of transmission components

In a third aspect of the invention, there is provided a method for arranging a connecting rod in an engine, comprising the step of arranging a connecting rod, having at least one surface being made of a metal matrix composite material, so that said metal matrix composite surface is in slide bearing contact with at least one of a gudgeon pin and a crank pin. The method according to the invention enables a construction where there is no need of conventional connecting rod bearing structures, such as a separate bearing arrangement for the big end bearing and a bushing for the small end bearing.

Preferably, the connecting rod is substantially made of the same metal matrix composite material as the surface being in slide bearing contact with the gudgeon pin or the crank pin. A big end hole of the connecting rod is arranged in slide bearing contact with a gudgeon pin and a small end hole of the connecting rod is arranged in slide bearing contact with a crank pin, said big end hole and said small end hole being defined by surfaces made of said metal matrix composite material.

Additional features and advantages of the invention will appear more clearly from the following detailed description of a preferred embodiment of the invention, which is given by way of non-limiting example only and with reference to the accompanying drawings.

### Brief description of the drawings

Fig. 1 is an exploded view of an embodiment of a pair of components according to the invention, namely a connecting rod in direct slide bearing relationship to a crank pin and a gudgeon pin.
Fig. 2 is an assembled view of the arrangement of Fig. 1.

### Detailed description of preferred embodiments of the invention

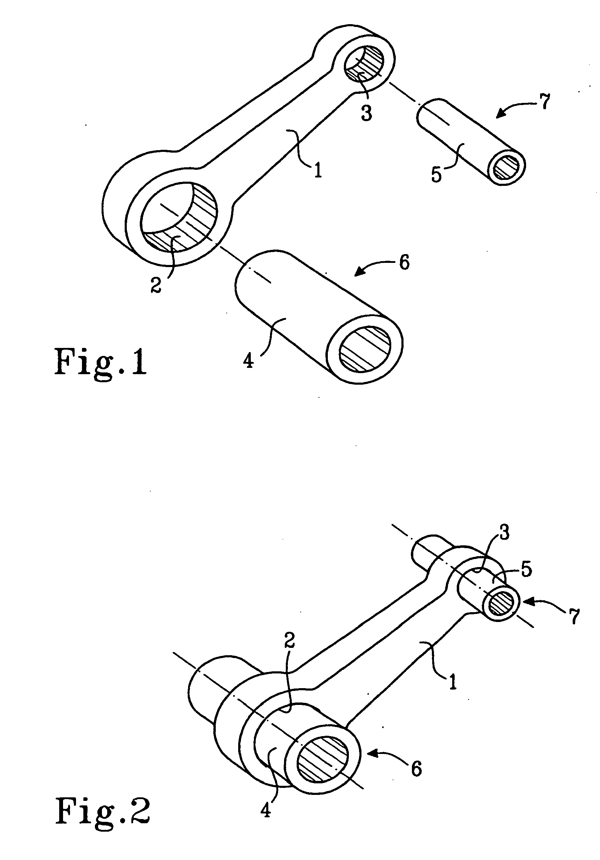

Fig. 1 depicts a pair of transmission components 1, 6;1, 7, wherein one of the components, in this case a connecting rod 1, is substantially made of a metal matrix composite (MMC) material. The component 1 has a first surface 2 and a second surface 3, both of which are intended to be arranged in a slide bearing relationship against another component, respectively. The first surface 2 is in this case the surface defining the big end hole of the connecting rod 1, whereas the small surface 3 is the surface defining the small end hole of the connecting rod 1.

The first surface 2 is arranged in a slide bearing relationship with a crank pin 6, and the second surface 3 is arranged in a slide bearing relationship with a gudgeon pin 7. The slide bearing surfaces of the crank pin 6 and the gudgeon pin 7, namely the outer surfaces 4, 5, are correspondingly shaped to the first surface 2 and the second surface 3, respectively, of the connecting rod 1.

The metal matrix composite material of which the transmission component 1 is made, comprises in this embodiment an aluminium base material (Al2124), being reinforced with 25% SiC particles having a size of 3 µm (F1200). The surfaces 2, 3 consist of the same material as the transmission component 1 as a whole, and has been accomplished by high speed machining. The surface roughness Ra is 0.6 µm. (The surface roughness Ra being defined as the average roughness.) It is presently believed that surfaces having a roughness value Ra between 0.4 and 1.0 µm should be the most useful.

The components that are arranged in slide bearing relationship with the MMC transmission component 1, namely the crank pin 6 and the gudgeon pin 7, are made of materials other than metal matrix composite materials. In this case, the crank pin 6 is made of steel (15CrNi6), having a surface roughness Ra of maximum 0.2 µm, and a surface hardness of minimum 700 HV. The surface 4 has a case-hardened depth of 0.9-1.1 mm. The gudgeon pin 7 is made of case-hardened steel (German standard 17262) with a hard-chromed surface.

Advantageous results have been achieved using components manufactured by powder metallurgical methods, but it is envisaged that other conventional manufacturing methods such as casting may be used. Regardless of the manufacturing method, the component may preferably be machined using high speed machining as described in WO 00/29151.

In use, the slide bearing arrangement at the big end of the connecting rod 1, involving the first surface 2 and the crank pin 6 is lubricated using full-film oil lubrication, at a pressure of between 30 and 50 kPa at 100 degrees C. The slide bearing arrangement at the small end of the connecting rod 1, involving the second surface 3 and the gudgeon pin 7 is lubricated using boundary lubrication, namely oil-splash lubrication.

As is apparent from Figs 1 and 2, the crank pin 6 and the gudgeon pin 7 are arranged in direct slide bearing relationship with the big end hole and the small end hole of the connecting rod 1. This arrangement differs from conventional arrangements, in which a bearing arrangement is arranged in relation to the big end hole in order to accomplish a connecting rod bearing, and a bushing is arranged in relation to the small end hole.

The described embodiment of the invention is by no means exhaustive; instead it is illustrative of the present invention. The person skilled in the art will readily appreciate that modifications may be made without departing from the scope and spirit of the present invention. For example, the invention has been described in relation to a connecting rod. Although this is a preferred embodiment, in which the advantages of the invention are particularly apparent, other transmission components in slide bearing applications could also be used in accordance with the invention. Also, although particles are presently believed to be the best reinforcement of the MMC material, one could envisage that whiskers or fibres may also be used. The preferred embodiment is described in relation to a connecting rod being a transmission component for use in a combustion engine. However, the term engine as used herein refers not only to combustion engines, but to other types of engines such as e.g. electrical engines.

## Claims

1. Use of a connecting rod (1), in a slide bearing application, said connecting rod (1) having at least one surface being (2; 3) arranged in a slide bearing relationship against a crank pin and/or a gudgeon pin (6; 7), **characterised in** said surface (2; 3) and at least a portion of the connecting rod (1) adjacent to said surface (2; 3) being made of the same metal matrix composite material, wherein the metal matrix composite (MMC) material comprises at least one base substance selected from the group consisting of aluminium, titanium, magnesium and alloys thereof, the MMC material has a reinforcement content between 10% and 70% and is selected from the group consisting of carbides, oxides or borides.

2. Use of a connecting rod according to claim 1, wherein said connecting rod (1) is substantially made of said metal matrix composite material.

3. Use of a connecting rod according to claim 1 or 2, wherein the surface (4;5) of said crank pin and/or gudgeon pin (6;7), being arranged in the slide bearing relationship with the metal matrix composite material surface (2; 3) of the connecting rod (1), is made of a different material than the MMC material of the connecting rod (1).

4. Use of a connecting rod according to claim 3, wherein the surface of said crank pin and/or gudgeon pin (6; 7), being arranged in the slide bearing relationship with the metal matrix composite material surface (2; 3) of the connecting rod (1), is made of a metal matrix composite material being different than the metal matrix composite material of the connecting rod (1).

5. Use of a connecting rod according to claim 3, wherein the surface of said crank pin and/or gudgeon pin (6; 7), being arranged in the slide bearing relationship with the metal matrix composite material surface (2;3) of the connecting rod (1), is made of a material other than a metal matrix composite material, preferably a steel or chromed steel material.

6. Use of a connecting rod according to any one of the preceding claims, wherein the slide bearing application is arranged with fluid-film lubrication or boundary lubrication.

7. Use of a connecting rod according to any one of the preceding claims, wherein said metal matrix composite material of the connecting rod (1) has a reinforcement content between 10% and 45%, most preferred between 15% and 40%.

8. Use of a transmission component according to any one of the preceding claims, wherein the reinforcement of the metal matrix composite material of the first component (1) is carbides.

9. Use of a connecting rod according to any one of the preceding claims, wherein said metal matrix material of the connecting rod (1) comprises aluminium, titanium or alloys thereof.

10. Use of a connecting rod according to any one of the preceding claims, wherein the reinforcement of the metal matrix composite material of the connecting rod (1) consists of particles having an average size less than 100 µm, preferably less than 15 µm, most preferred less than 5 µm, and/or having a hardness greater than 1200 HV, preferably greater than 2000 HV, most preferred greater than 2500 HV.

11. A connecting rod and a crank pin and/or a gudgeon pin (1,6; 1,7), said connecting rod and crank pin and/or gudgeon pin (1,6; 1,7) having slide bearing surfaces (2, 4; 3,5) being correspondingly shaped to one another, enabling arrangement of said surfaces (2, 4; 3,5) against each other in a slide bearing relationship, wherein the slide bearing surface (2;3) of said connecting rod (1) and at least a portion of said connecting rod adjacent to said surface is made of the same metal matrix composite material, wherein the metal matrix composite (MMC) material comprises at least one base substance selected from the group consisting of aluminium, titanium, magnesium and alloys thereof, the MMC material has a reinforcement content between 10% and 70% and is selected from the group consisting of carbides, oxides or borides.

12. A connecting rod and a crank pin and/or gudgeon pin according to claim 11, wherein the connecting rod (1) is substantially made of the metal matrix composite material.

13. A connecting rod and a crank pin and/or gudgeon pin according to claim 11 or 12, wherein the slide bearing surface (4;5) of the crank pin and/or gudgeon pin (6;7) is made of a material different from the metal matrix composite material of the connecting rod (1).

14. A connecting rod and a crank pin and/or gudgeon pin according to claim 13, wherein the slide bearing surface (4;5) of the crank pin and/or gudgeon pin (6;7) is made of a metal matrix composite material being different from the metal matrix composite material of the connecting rod (1).

15. A connecting rod and a crank pin and/or gudgeon pin according to claim 13, wherein the slide bearing surface (4;5) of the crank pin and/or gudgeon pin (6;7) is made of a material other than a metal matrix composite material, preferably a steel or a chromed steel material.

16. A connecting rod and a crank pin and/or gudgeon pin according to any one of the claims 11 to 15, wherein said metal matrix composite material of the connecting rod (1) has a reinforcement content between 10% and 45%, most preferred between 15% and 40%.

17. A connecting rod and a crank pin and/or gudgeon pin according to any one of the claims 11 to 16, wherein the reinforcement of the metal matrix composite material of the connecting rod (1) is carbides.

18. Method for arranging a connecting rod in an engine, comprising the step of arranging a connecting rod (1), having at least one surface (2;3) being made of a metal matrix composite material, so that said surface (2;3) is in slide bearing contact with a gudgeon pin (6) or a crank pin (7), wherein the metal matrix composite (MMC) material comprises at lest one base substance selected from the group consisting of aluminium, titanium, magnesium and alloys thereof, the MMC material has a reinforcement content between 10% and 70% and is selected from the group consisting of carbides, oxides or borides.

19. Method according to claim 18, wherein the surface (2;3) being in slide bearing contact with the gudgeon pin (6) or the crank pin (7) and at least a portion of the connecting rod (1) adjacent to said surface is made of the same metal matrix composite material.

## Patentansprüche

1. Verwendung eines Pleuels (1) in einer Gleitlageranwendung,
wobei das Pleuel (1) mindestens eine Oberfläche (2; 3) aufweist, die gleitgelagert gegen einen Kurbelzapfen und/oder einen Kolbenbolzen (6; 7) angeordnet ist, **dadurch gekennzeichnet, dass** die Oberfläche (2; 3) und mindestens ein der Oberfläche (2; 3) benachbarter Teil des Pleuels (1) aus dem gleichen Metallmatrixverbundwerkstoff hergestellt sind;
wobei der Metallmatrixverbundwerkstoff (MMC) zumindest eine Grundsubstanz ausgewählt aus der aus Aluminium, Titan, Magnesium und ihren Legierungen bestehenden Gruppe aufweist, das MMC-Material einen Verstärkungsanteil zwischen 10% und 70% aufweist und aus der Gruppe bestehend aus Carbiden, Oxiden und Boriden ausgewählt wird.

2. Verwendung eines Pleuels nach Anspruch 1, bei der das Pleuel (1) im Wesentlichen aus dem Metallmatrixverbundwerkstoff hergestellt wird.

3. Verwendung eines Pleuels nach Anspruch 1 oder 2, bei der diejenige Oberfläche (4; 5) des Kurbelzapfens und/oder des Kolbenbolzens (6; 7), die gleitgelagert mit der Metallmatrixverbundwerkstoffoberfläche (2; 3) des Pleuels (1) angeordnet ist, aus einem anderen Material als dem MMC-Material des Pleuels (1) hergestellt ist.

4. Verwendung eines Pleuels nach Anspruch 3, bei der diejenige Oberfläche (4; 5) des Kurbelzapfens und/oder des Kolbenbolzens (6; 7), die gleitgelagert mit der Metallmatrixverbundwerkstoffoberfläche (2; 3) des Pleuels (1) angeordnet ist, aus einem anderen Metallmatrixverbundwerkstoff hergestellt ist als dem Metallmatrixverbundwerkstoff des Pleuels (1).

5. Verwendung eines Pleuels nach Anspruch 3, bei der diejenige Oberfläche (4; 5) des Kurbelzapfens und/oder des Kolbenbolzens (6; 7), die gleitgelagert mit der Metallmatrixverbundwerkstoffoberfläche (2; 3) des Pleuels (1) angeordnet ist, aus einem anderen Material hergestellt ist als dem Metallmatrixverbundwerkstoff, bevorzugt einem Stahl- oder einem verchromten Stahlmaterial.

6. Verwendung eines Pleuels nach einem der vorhergehenden Ansprüche, bei der die Gleitlageranwendung mit einer Flüssigfilmschmierung oder einer Grenzschmierung angeordnet ist.

7. Verwendung eines Pleuels nach einem der vorhergehenden Ansprüche, bei der der Metallmatrixverbundwerkstoff des Pleuels (1) einen Verstärkungsanteil zwischen 10% und 45%, am meisten bevorzugt zwischen 15% und 40% aufweist.

8. Verwendung einer Getriebekomponente nach einem der vorhergehenden Ansprüche, bei der die Verstärkung des Metallmatrixverbundwerkstoffs der ersten Komponente (1) aus Carbiden besteht.

9. Verwendung eines Pleuels nach einem der vorhergehenden Ansprüche, bei der der Metallmatrixverbundwerkstoff des Pleuels (1) Aluminium, Titan oder ihre Legierungen aufweist.

10. Verwendung eines Pleuels nach einem der vorhergehenden Ansprüche, bei der die Verstärkung des Metallmatrixverbundwerkstoff des Pleuels (1) aus Partikeln mit einer Durchschnittsgröße von weniger als 100 µm, vorzugsweise weniger als 15 µm, am bevorzugtesten weniger als 5 µm, und/oder mit einer Härte größer als 1200 HV, vorzugsweise größer als 2000 HV, am bevorzugtesten größer als 2500 HV, besteht.

11. Pleuel und Kurbelzapfen und/oder Kolbenbolzen (1, 6; 1, 7) mit zueinander korrespondierend geformten Gleitlageroberflächen (2, 4; 3, 5), was die Anordnung der gleitgelagerten Oberflächen (2, 4; 3, 5) gegeneinander ermöglicht,
wobei die Gleitlageroberfläche (2; 3) des Pleuels (1) und zumindest ein zu der Oberfläche benachbarter Teil des Pleuels aus dem gleichen Metallmatrixverbundwerkstoff hergestellt sind,
wobei der Metallmatrixverbundwerkstoff (MMC) zumindest eine Grundsubstanz ausgewählt aus der aus Aluminium, Titan, Magnesium und ihren Legierungen bestehenden Gruppe aufweist, das MMC-Material einen Verstärkungsanteil zwischen 10% und 70% aufweist und aus der Gruppe bestehend aus Carbiden, Oxiden und Boriden ausgewählt wird.

12. Pleuel und Kurbelzapfen und/oder Kolbenbolzen nach Anspruch 11, **dadurch gekennzeichnet, dass** das Pleuel (1) im Wesentlichen aus dem Metallmatrixverbundwerkstoff hergestellt wird.

13. Pleuel und Kurbelzapfen und/oder Kolbenbolzen nach Anspruch 11 oder 12, **dadurch gekennzeichnet, dass** die Gleitlageroberfläche (4; 5) des Kurbelzapfens und/oder des Kolbenbolzens (6; 7) aus einem anderen Material als dem Metallmatrixverbundwerkstoff des Pleuels hergestellt ist.

14. Pleuel und Kurbelzapfen und/oder Kolbenbolzen nach Anspruch 13, **dadurch gekennzeichnet, dass** die Gleitlageroberfläche (4; 5) des Kurbelzapfens und/oder des Kolbenbolzens (6; 7) aus einem anderen Metallmatrixverbundwerkstoff als dem Metallmatrixverbundwerkstoff des Pleuels (1) hergestellt ist.

15. Pleuel und Kurbelzapfen und/oder Kolbenbolzen nach Anspruch 13, **dadurch gekennzeichnet, dass** die Gleitlageroberfläche (4; 5) des Kurbelzapfens und/oder des Kolbenbolzens (6; 7) aus einem anderen Material als dem Metallmatrixverbundwerkstoff, bevorzugt aus einem Stahl- oder aus einem verchromten Stahlmaterial, hergestellt ist.

16. Pleuel und Kurbelzapfen und/oder Kolbenbolzen nach einem der Ansprüche 11 bis 15, **dadurch gekennzeichnet, dass** der Metallmatrixverbundwerkstoff des Pleuels (1) einen Verstärkungsanteil zwischen 10% und 45%, am meisten bevorzugt zwischen 15% und 40% aufweist.

17. Pleuel und Kurbelzapfen und/oder Kolbenbolzen nach einem der Ansprüche 11 bis 16, **dadurch gekennzeichnet, dass** die Verstärkung des Metallmatrixverbundwerkstoffs des Pleuels (1) aus Carbiden besteht.

18. Verfahren zur Anordnung eines Pleuels in einem Motor, umfassend den Schritt der Anordnung eines Pleuels (1) mit mindestens einer Oberfläche (2; 3) aus einem Metallmatrixverbundwerkstoff, so dass die Oberfläche (2; 3) in Gleitlagerkontakt mit dem Kurbelzapfen (6) und/oder dem Kolbenbolzen (7) steht, wobei der Metallmatrixverbundwerkstoff (MMC) zumindest eine Grundsubstanz ausgewählt aus der aus Aluminium, Titan, Magnesium und ihrer Legierungen bestehenden Gruppe aufweist, das MMC-Material einen Verstärkungsanteil zwischen 10% und 70% aufweist und aus der Gruppe bestehend aus Carbiden, Oxiden und Boriden ausgewählt wird.

19. Verfahren nach Anspruch 18, bei dem die Oberfläche (2; 3), die in Gleitlagerkontakt mit dem Kurbelzapfen (6) oder dem Kolbenbolzen (7) steht und zumindest ein zu der Oberfläche benachbarter Teil des Pleuels(1) aus dem gleichen Metallmatrixverbundwerkstoff hergestellt werden.

## Revendications

1. Utilisation d'une bielle (1), dans une application de palier lisse, ladite bielle (1) présentant au moins une première surface (2 ; 3) agencée en relation de palier lisse contre un maneton et/ou un axe de piston (6 ; 7), **caractérisée en ce que** ladite surface (2 ; 3) et au moins une partie de la bielle (1) adjacente à ladite surface (2 ; 3) sont réalisées en un même matériau composite à matrice métallique, dans laquelle le matériau composite à matrice métallique (MMC) comprend au moins une substance de base sélectionnée à partir du groupe constitué par l'aluminium, le titane, le magnésium et leurs alliages, le matériau MMC présente une teneur en élément de renforcement comprise entre 10 % et 70 % et est sélectionné à partir du groupe constitué par des carbures, des oxydes ou des borures.

2. Utilisation d'une bielle selon la revendication 1, dans laquelle ladite bielle (1) est réalisée principalement en un matériau composite à matrice métallique.

3. Utilisation d'une bielle selon la revendication 1 ou 2, dans laquelle la surface (4;5) dudit maneton et/ou axe de piston (6;7), qui est agencée en relation de palier lisse avec la surface de matériau composite à matrice métallique (2 ; 3) de la bielle (1), est réalisée en un matériau différent du matériau MMC de la bielle (1).

4. Utilisation d'une bielle selon la revendication 3, dans laquelle la surface dudit maneton et/ou axe de piston (6 ; 7), qui est agencée en relation de palier lisse avec la surface de matériau composite à matrice métallique (2 ; 3) de la bielle (1), est réalisée en un matériau composite à matrice métallique différent du matériau composite à matrice métallique de la bielle (1).

5. Utilisation d'une bielle selon la revendication 3, dans laquelle la surface dudit maneton et/ou axe de piston (6 ; 7), qui est agencée en relation de palier lisse avec la surface de matériau composite à matrice métallique (2 ; 3) de la bielle (1), est réalisée en un matériau autre qu'un matériau composite à matrice métallique, de préférence, un matériau à base d'acier ou d'acier chromé.

6. Utilisation d'une bielle selon l'une quelconque des revendications précédentes, dans laquelle l'application de palier lisse est agencée avec une lubrification à film fluide ou une lubrification à couche limite.

7. Utilisation d'une bielle selon l'une quelconque des revendications précédentes, dans laquelle ledit matériau composite à matrice métallique de la bielle (1) présente une teneur en élément de renforcement comprise entre 10 % et 45 %, plus préférablement entre 15 % et 40 %.

8. Utilisation d'un composant de transmission selon l'une quelconque des revendications précédentes, dans laquelle l'élément de renforcement du matériau composite à matrice métallique du premier composant (1) est à base de carbures.

9. Utilisation d'une bielle selon l'une quelconque des revendications précédentes, dans laquelle ledit matériau composite à matrice métallique de la bielle (1) comprend de l'aluminium, du titane ou des alliages de ceux-ci.

10. Utilisation d'une bielle selon l'une quelconque des revendications précédentes, dans laquelle l'élément de renforcement du matériau composite à matrice métallique de la bielle (1) est constitué de particules présentant une taille moyenne inférieure à 100 µm, de préférence, inférieure à 15 5 µm, plus préférablement inférieure à 5 µm, et/ou présentant une dureté supérieure à 1200 HV, de préférence, supérieure à 2000 HV, plus préférablement supérieure à 2500 HV.

11. Bielle et maneton et/ou axe de piston (1, 6 ; 1, 7), lesdites bielle et maneton et/ou axe de piston (1, 6 ; 1, 7) présentant des surfaces formant palier lisse (2, 4 ; 3, 5) qui sont formées de manière conjuguées l'une par rapport à l'autre, permettant l'agencement desdites surfaces (2, 4 ; 3, 5) l'une contre l'autre en relation de palier lisse, dans lesquels la surface de palier lisse (2 ; 3) de ladite bielle (1) et au moins une partie de ladite bielle adjacente à ladite surface sont réalisées en un même matériau composite à matrice métallique, dans lesquels le matériau composite à matrice métallique (MMC) comprend au moins une substance de base sélectionnée à partir du groupe constitué par l'aluminium, le titane, le magnésium et leurs alliages, le matériau MMC présente une teneur en élément de renforcement comprise entre 10 % et 70 % et est sélectionné à partir du groupe constitué par des carbures, des oxydes ou des borures.

12. Bielle et maneton et/ou axe de piston selon la revendication 11, dans lesquels la bielle (1) est réalisée principalement en un matériau composite à matrice métallique.

13. Bielle et maneton et/ou axe de piston selon la revendication 11 ou 12, dans lesquels la surface formant palier lisse (4 ; 5) du maneton et/ou de l'axe de piston (6 ; 7) est réalisée en un matériau différent du matériau composite à matrice métallique de la bielle (1).

14. Bielle et maneton et/ou axe de piston selon la revendication 13, dans lesquels la surface de palier lisse (4 ; 5) du maneton et/ou de l'axe de piston (6 ; 7) est réalisée en un matériau composite à matrice métallique différent du matériau composite à matrice métallique de la bielle (1).

15. Bielle et maneton et/ou axe de piston selon la revendication 13, dans lesquels la surface de palier lisse (4 ; 5) du maneton et/ou de l'axe de piston (6 ; 7) est réalisée en un matériau autre qu'un matériau composite à matrice métallique, de préférence, un matériau à base d'acier ou d'acier chromé.

16. Bielle et maneton et/ou axe de piston selon l'une quelconque des revendications 11 à 15, dans lesquels ledit matériau composite à matrice métallique de la bielle (1) présente une teneur en élément de renforcement comprise entre 10 % et 45 %, plus préférablement, entre 15 % et 40 %.

17. Bielle et maneton et/ou axe de piston selon l'une quelconque des revendications 11 à 16, dans lesquels l'élément de renforcement du matériau composite à matrice métallique de la bielle (1) est à base de carbures.

18. Procédé d'agencement d'une bielle dans un moteur, comprenant l'étape d'agencement d'une bielle (1), présentant au moins une surface (2 ; 3) réalisée en un matériau composite à matrice métallique, de telle sorte que ladite surface (2 ; 3) est en contact de palier lisse avec un axe de piston (6) ou un maneton (7), dans lequel le matériau composite à matrice métallique (MMC) comprend au moins une substance de base sélectionnée à partir du groupe constitué par l'aluminium, le titane, le magnésium et leurs alliages, le matériau MMC présente une teneur en élément de renforcement comprise entre 10 % et 70 % et est sélectionné à partir du groupe constitué par des carbures, des oxydes ou des borures.

19. Procédé selon la revendication 18, dans lequel la surface (2 ; 3) qui est en contact de palier lisse avec l'axe de piston (6) ou le maneton (7) et au moins une partie de la bielle (1) adjacente à ladite surface sont réalisées à partir du même matériau composite à matrice métallique.
